# EUROPÄISCHE PATENTANMELDUNG

(11) **EP 4 707 093 A1**
(43) Veröffentlichungstag der Anmeldung: **11.03.2026**
(21) Anmeldenummer: 25192703.4
(22) Anmeldetag: 30.07.2025
(51) Int. Cl.: B60T 13/74

(54) **FORMSCHLÜSSIG VERBUNDENES, MEHRTEILIGES GEHÄUSES FÜR EINE ELEKTROMECHANI- 5 SCHE BREMSE UND VERFAHREN ZU DESSEN HERSTELLUNG**

(30) Priorität: 04.09.2024 DE 102024208406
(71) Anmelder: Robert Bosch GmbH, 70442 Stuttgart (DE)
(72) Erfinder: Lutz, Bernd, 87437 Kempten (DE); Welm, Markus, 87534 Oberstaufen (DE); Klehr, Matthias, 87435 Kempten (Allgaeu) (DE); Augenthaler, Florian, 87509 Immenstadt Im Allgaeu (DE); Loew, Kornelius, 74193 Schwaigern (DE)

(57) **Zusammenfassung**

Verfahren zur Herstellung einer elektromechanischen Bremsvorrichtung (1), insbesondere für den Einsatz in einem Kraftfahrzeug, umfassend das Verbinden eines Kraftgehäuses (02) und eines Motorgehäuses (04) mittels einer Formschlussverbindung, wobei in dem Kraftgehäuse (02) zur wenigstens teilweisen Aufnahme eines Gewindetriebs (3), bevorzugt eines Kugelgewindetriebs, eingerichtet ist und wobei das Motorgehäuse (04) zur Aufnahme eines elektrischen Antriebsmotors samt einer mit dem Gewindetrieb (03) in einem verbundenen Zustand kämmenden Übertragungseinheit (06), bevorzugt einer Motorschnecke, eingerichtet ist.

## Beschreibung

### Technisches Gebiet

Die Erfindung betrifft ein Verfahren zur Herstellung einer elektromechanischen Bremsvorrichtung, insbesondere für den Einsatz in einem Kraftfahrzeug. Weiterhin betrifft die Vorrichtung eine elektromechanische Bremsvorrichtung, bevorzugt hergestellt nach dem erfindungsgemäßen Verfahren.

### Stand der Technik

Im Bereich der Kraftfahrzeuge und in anderen Bereichen sind hydraulisch betätigte Scheibenbremsen lange bekannt und weit verbreitet. Im Zuge der voranschreitenden Elektrifizierung von Kraftfahrzeugen sind in der Vergangenheit auch vermehrt elektromechanische Bremsvorrichtungen vorgeschlagen worden, welche die Bremskraft auf der Grundlage eines elektromechanischen Wirkmechanismus aufbauen oder bereitstellen. Dazu kann vorteilhaft eine rotatorische Bewegung, wie beispielsweise eines Elektromotors, mittels eines Gewindetriebs in eine translatorische Bewegung übersetzt werden, die dann eine Bremskraft, beispielsweise vor Bremsbelägen auf eine Bremsscheibe, verursacht.

Im Stand der Technik ist dabei bereits vorgesehen den Elektromotor und den Gewindetrieb in einem gemeinsamen Gehäuse anzuordnen, um eine kompakte Bauweise zu ermöglichen. Da Teile des Gehäuses, insbesondere im Bereich des Gewindetriebs und dessen Abstützung oder Lagerung bei jedem Bremsvorgang hohen Kräften und Belastungen ausgesetzt sind, sind die Gehäuse im Stand der Technik regelmäßig aus sehr stabilem aber auch verhältnismäßig schwerem Stahl, beispielsweise als Drehteil, gefertigt. Dies bringt den Nachteil mit sich, dass die elektromechanische Bremsvorrichtung insgesamt relativ schwer ausfällt. Außerdem erfordert die bekannte Ausgestaltung ein relativ komplexes und aufwendiges Fertigungsverfahren der elektromechanischen Bremsvorrichtung, weil diese sukzessive aufgebaut werden muss, in dem Bauteil für Bauteil oder Baugruppe für Baugruppe in dem Gehäuse platziert und/oder gesichert wird.

Die DE 102 50 843 A1 beschreibt ein Wischerlager für eine Wischerwelle einer Scheibenwischanlage und ein dazugehöriges Herstellungsverfahren. Ein Rohrende eines Halterohrs ist/wird dabei mit einem Befestigungsabschnitt verbunden, wozu der Befestigungsabschnitt eine Zapfen-Rohr-Aufnahme aufweist, die zudem radiale Öffnungen umfasst, über die ein Verstemmen von Material des Rohrendes in den Befestigungsabschnitt vorgenommen wird, um das Rohrende an dem Befestigungsabschnitt zu sichern bzw. zu befestigen.

Aus der DE 10 2009 055 340 A1 ist ein Kfz-Ventilmodul und ein Verfahren zur Herstellung eines Ventilmoduls bekannt, bei dem eine Gehäusekappe über eine lokale plastische Verformung von Material der Gehäusekappe in eine Vertiefung eines Grundkörpers an dem Grundkörper befestigt wird.

Es ist die Aufgabe der vorliegenden Erfindung die Nachteile im Stand der Technik zu überwinden.

### Offenbarung der Erfindung

Das erfindungsgemäße Verfahren zur Herstellung einer elektromechanischen Bremsvorrichtung mit den Merkmalen des Anspruchs 1 und die elektromechanische Bremsvorrichtung mit den Merkmalen des Anspruchs 7 haben den Vorteil, dass diese eine Gewichtsreduktion der elektromechanischen Bremsvorrichtung ermöglichen und gleichzeitig eine effektive, insbesondere zeit- und kostensparende Fertigung der elektromechanischen Bremsvorrichtung erlauben, ohne dass dabei die Stabilität des Gehäuse und/oder die Einleitung oder Ableitung von Kräften auf oder über das Gehäuse nachteilig beeinflusst werden.

Das erfindungsgemäße Verfahren zur Herstellung einer elektromechanischen Bremsvorrichtung, insbesondere für den Einsatz in einem Kraftahrzeug sieht dabei den erfindungsgemäßen Verfahrensschritt vor, gemäß dem ein Verbinden eines Kraftgehäuses und eines Motorgehäuses mittels einer Formschlussverbindung erfolgt, wobei das Kraftgehäuse zur wenigstens teilweisen Aufnahme eines Gewindetriebs, bevorzugt eines Kugelgewindetriebs eingerichtet ist und wobei das Motorgehäuse zur Aufnahme eines elektrischen Antriebsmotors samt einer mit dem Gewindetrieb in einem verbundenen Zustand kämmenden Übertragungseinheit, bevorzugt einer Motorschnecke, eingerichtet ist.

Das Vorsehen von wenigstens zwei Gehäuseteilen, nämlich dem Motorgehäuse und dem Kraftgehäuse ermöglicht die jeweiligen Gehäuseeigenschaften optimal an die jeweiligen Erfordernisse, beispielsweise an Stabilität, Steifigkeit und/oder Kraftaufnahme, anzupassen und dadurch in weniger beanspruchten Bereichen, beispielsweise im Bereich des Motorgehäuses, ein Gehäuse zu verwenden, welches weniger stabil aber auch entsprechend leicht ausgebildet ist und andererseits im Bereich des Kraftgehäuses, welches - wie der Name schon sagt, hohe Kräfte aufnehmen und ableiten muss - ein Gehäuse oder Gehäuseteil zu verwenden, das entsprechenden Anforderungen an die Stabilität genügt. Durch das Ausbilden einer Formschlussverbindung zwischen den zwei Gehäusen oder Gehäuseteilen kann in besonders vorteilhafter Weise erreicht werden, dass insgesamt ein stabiles Gesamtgehäuse der elektromechanischen Bremsvorrichtung gebildet wird, ohne dass beispielsweise bei der Verwendung unterschiedlicher Materialien für das Motorgehäuse und das Kraftgehäuse unterschiedliche thermische Ausdehnungskoeffizienten der Materialen die Verbindung der Gehäuseteile schwächen.

Vorteilhafte Weiterbildungen des erfindungsgemäßen Verfahrens sind in den Unteransprüchen aufgeführt.

In einer ersten, bevorzugten Ausführungsform des Verfahrens kann vorgesehen sein, dass das Kraftgehäuse und das Motorgehäuse in eine Verbindungsposition gebracht werden, in der ein Einformen von Material des Motorgehäuses von außen in eine auf einer Außenoberfläche des Kraftgehäuses ausgebildeten Nut zur Ausbildung der Formschlussverbindung durchgeführt wird. Ein solches umformtechnisches Fügen, welches in Fachkreisen mitunter auch als "Crimpen" bezeichnet wird, hat den Vorteil, dass es relativ gut automatisierbar ist und eine sehr stabile und langlebige Formschlussverbindung generiert.

Die Verbindungsposition kann so gewählt sein, dass ein Teil oder eine Kontur des Motorgehäuses mit einem gegenüberliegenden Teil oder einer gegenüberliegenden Kontur des Kraftgehäuses zur Anlage gebracht wird oder auf Stoß zueinander angeordnet werden. Dadurch kann relativ sicher und einfach die Verbindungsposition von Motorgehäuse und Kraftgehäuse als Relativposition der beiden Bauteile erreicht werden, in der das Einformen des Materials des Motorgehäuses stattfindet.

In einer weiteren bevorzugten Variante des Verfahrens kann vorgesehen sein, dass eine Einformposition von Motorgehäuse und Kraftgehäuse, welche sich beide bevorzugt bereits in der Verbindungsposition befinden, gegenüber einem Einformwerkzeug über eine Position einer Prägekontur, bevorzugt eines Prägerings, insbesondere auf eine Außenoberfläche des Motorgehäuses, eingestellt wird. Dies hat den besonderen Vorteil, dass eine Positionierung des Kraftgehäuses und des Motorgehäuses einfach und zuverlässig möglich wird, in dem bevorzugt zunächst die Verbindungsposition der beiden Gehäuse oder Gehäuseteile hergestellt und anschließend in dieser Relativanordnung der Gehäuseteile das Motorgehäuse und dessen optisch erkennbare Außenoberfläche sowie die darin ausgebildete Prägekontur genutzt wird, um die Positionierung der Gehäuseteile gegenüber einem Einformwerkzeug herzustellen und somit die Einformposition zu erreichen.

In einer besonders bevorzugten Weiterbildung des Verfahrens kann vorgesehen sein, dass das Einformen mit einem Einformwerkzeug, bevorzugt einem Stempel, durchgeführt wird, das/der eine größere Höhenerstreckung als die Prägekontur, bevorzugt der Prägering, aufweist. Dadurch wird in besonders vorteilhafter Weise erreicht, dass auch bei einer Positionierung der Gehäuseteile gegenüber dem Einformwerkzeug mit einer nur mittleren Präzision eine erfolgreiche Herstellung oder Ausbildung der Formschlussverbindung erreicht werden kann, indem auch bei einer gewissen Fehlpositionierung der Gehäuseteile oder einer Positionierung außerhalb einer Idealposition die gesamte Prägekontur oder zumindest ein Abschnitt der Prägekontur über die gesamte Höhe nach innen eingeformt wird, weil die tolerierbare Abweichung der Positionierung der Gehäuseteile und damit der Prägekontur durch einen entsprechend größeren, insbesondere höheren Stempel oder ein alternatives Einformwerkzueg kompensiert wird.

Ebenfalls kann in einer besonders wünschenswerten Ausgestaltung des Verfahrens vorgesehen sein, dass durch das Einformen des Materials des Motorgehäuses in die Nut des Kraftgehäuses in Radialrichtung das Motorgehäuse und das Kraftgehäuse, insbesondere in Axialrichtung, in die Verbindungsposition kraftbeaufschlagt und/oder vorgespannt werden, wozu die Nut einen Flaschenhals-Querschnitt aufweist. Durch die Ausgestaltung der Nut bevorzugt mit einem zur Radialrichtung winklig oder abgeschrägten Teil einer Nutwand, der zudem vorteilhaft in einen Radienübergang übergeht, kann in besonders vorteilhafter Weise erreicht werden, dass beim Einformen des Materials, obwohl die Einformrichtung des Einformwerkzeugs ausschließlich oder weitestgehend in Radialrichtung verläuft durch das eingeformte Werkzeug, welches auf den Flaschenhals-Querschnitt der Nut des Kraftgehäuses trifft auch eine Kraft oder Kraftkomponnte in Axialrichtung erzeugt werden, wobei der Flaschenhals-Querschnitt so ausgerichtet ist, dass in Axialrichtung das Motorgehäuse auf das Kraftgehäuse zu kraftbeaufschlagt und/oder vorgespannt wird. Dadurch wird sichergestellt, dass das über das die Formschlussverbindung verbundene Gehäuse umfassend das Motorgehäuse und das Kraftgehäuse sicher und zuverlässig in der Verbindungsposition verbunden ist und verbunden bleibt, wodurch in vorteilhafter Weise sicher und zuverlässig der Eingriff oder der kämmende Eingriff zwischen dem Gewindetrieb einerseits und der Übertragungseinheit, bevorzugt der Motorschnecke andererseits gewährleistet werden kann.

In einer weiteren, besonders vorteilhaften Ausgestaltung des Verfahrens kann weiter vorgesehen sein, dass vor dem Verbinden des Kraftgehäuses und des Motorgehäuses der Gewindetrieb in dem Kraftgehäuse vormontiert wird und/oder der Antriebsmotor und/oder die Übertragungseinheit und/oder eine Steuereinheit in dem Motorgehäuse vormontiert wird. Dadurch kann erreicht werden, dass das Motorgehäuse und das Kraftgehäuse jeweils weitgehend integrierte Baugruppen aufnehmen oder lagern, sodass diese einerseits separat und dementsprechend effektiv vorgefertigt werden können und andererseits durch die Verbindung von Motorgehäuse und Kraftgehäuse nicht nur eine mechanische Verbindung, sondern auch eine weitgehend funktionelle Koppelung der Baugruppen erreicht wird.

Weiterhin ist auch eine elektromechanische Bremsvorrichtung, insbesondere für den Einsatz in einem Kraftfahrzeug, von der Erfindung umfasst. Die erfindungsgemäße elektromechanische Bremsvorrichtung wird bevorzugt nach einem der vorangehend beschriebenen Verfahren hergestellt. Erfindungsgemäß ist vorgesehen, dass über eine Formschlussverbindung ein Kraftgehäuse, in dem ein Gewindetrieb, bevorzugt ein Kugelgewindetrieb, wenigstens teilweise aufgenommen ist und ein Motorgehäuse, in dem ein elektrischer Antriebsmotor samt einer mit dem Gewindetrieb in einem verbundenen Zustand kämmende Übertragungseinheit, bevorzugt Motorschnecke, aufgenommen ist, miteinander verbunden sind.

Bezüglich der vorteilhaften Wirkungen und Vorteile der erfindungsgemäßen elektromechanischen Bremsvorrichtung wird auf das oben beschriebene, erfindungsgemäße Verfahren verwiesen.

In einer vorteilhaften Ausgestaltung der elektromechanischen Bremsvorrichtung kann vorgesehen sein, dass die Formschlussverbindung zwischen Kraftgehäuse und Motorgehäuse durch von außen eingeformtes Material des Motorgehäuses in eine auf einer Außenoberfläche des Kraftgehäuses ausgebildete Nut gebildet ist. Durch eine solche, auch als Crimp-Verbindung bezeichnete, Verbindung kann in besonders vorteilhafter Weise eine sichere und zuverlässige sowie langlebige Verbindung von Motorgehäuse und Kraftgehäuse hergestellt werden.

In einer weiteren, besonders wünschenswerten Ausgestaltung der elektromechanischen Bremsvorrichtung kann vorgesehen sein, dass das Motorgehäuse Aluminiummaterial aufweist oder daraus besteht und/oder das Kraftgehäuse Stahlmaterial aufweist oder daraus besteht. Ein Kraftgehäuse aus Stahl, bevorzugt als Drehteil, kann in besonders vorteilhafter Weise hohe Kräfte und Belastungen aufnehmen und ableiten. Das Motorgehäuse aus oder mit Aluminiummaterial kann besonders vorteilhaft das Gesamtgewicht der elektromechanischen Bremsvorrichtung reduzieren. Eine Realisierung des Motorgehäuses als Aluminiumbauteil, insbesondere als Aluminium-Fräs-Bauteil ist auch deshalb möglich, weil das Motorgehäuse wenig Kräfte aufnehmen und ableiten muss. Weiterhin ermöglicht Aluminiummaterial besonders gut das Umformen und Einformen von Material.

In einer besonders vorteilhaften Ausgestaltung kann vorgesehen sein, dass mehrere Formschlussverbindungen mittels von außen eingeformtem Material des Motorgehäuses in eine auf die Außenoberfläche des Kraftgehäuses ausgebildete Nut ausgebildet sind. Dadurch kann besonders vorteilhaft die Belastung auf jede einzelne Formschlussverbindung verringert und die Stabilität der Verbindung insgesamt über die einzelnen Formschlussverbindungen erhöht werden. Beispielsweise können die Formschlussverbindungen in einer Umfangsrichtung gleichmäßig verteilt angeordnet sein. Beispielsweise können mit jeweils einem Winkelversatz von etwa 90° in Umfangsrichtung vier Einformungen ausgebildet sein, die jeweils eine entsprechende Einzel-Formschlussverbindung ausbilden.

In einer weiteren, besonders vorteilhaften Ausgestaltung der elektromechanischen Bremsvorrichtung kann vorgesehen sein, dass auf einer Außenoberfläche des Motorgehäuses eine Prägekontur, bevorzugt ein Prägering, ausgebildet ist, der insbesondere beidseitig durch eine Nut begrenzt ist. Die Prägekontur ist insbesondere nur in den Bereichen der verbundenen Gehäuse, insbesondere Motorgehäuse und Kraftgehäuse, ausgebildet oder noch ausgebildet, in dem keine Einformung von Material stattgefunden hat. Die Ausbildung als Prägering hat den Vorteil, dass das Einfomren von Material bezüglich auf eine Rotation um eine Längsachse oder Axialrichtung weitgehend frei oder zumindest mit geringer Präzision variabel erfolgen kann, sodass keine zu große Anforderung an die Präzision der Positionierung von Motorgehäuse und/oder Kraftgehäuse gestellt werden.

Wenn besonders vorteilhaft die Prägekontur oder der Prägering beidseitig durch eine Nut begrenzt ist, hat dies den Vorteil, dass im Rahmen der Ausbildung der Formschlussverbindung, insbesondere im Rahmen des Crimpen, ein Einformwerkzeug verwendet werden kann, welches senkrecht zur Erstreckung oder Ausdehnung der Nut(en) größer ausfällt, als die Prägekontur und somit beim Einformen je nach Positionierung des Motorgehäuses gegenüber dem Einformwerkzeug auch in Bereiche der Nut verbracht wird. Die Nuten haben dabei besonders vorteilhaft die Wirkung, dass im Bereich der Nuten keine oder nur eine minimale Einformung von Material erfolgt, sodass letztendlich nur die Prägekontur oder Abschnitte der Prägekontur - entlang der Erstreckung - nach innen verformt werden. Damit dienen die Nuten besonders vorteilhaft als Puffer oder Toleranzmittel, die eine sichere Einformung von ausreichend viel Material in der richtigen Position ermöglichen, selbst wenn die Relativanordnung von Einformwerkzeug und Motorgehäuse nicht hochpräzise ist.

Weitere Vorteile, Merkmale und Einzelheiten der Erfindung ergeben sich aus der nachfolgenden Beschreibung bevorzugter Ausführungsformen der Erfindung sowie anhand der Zeichnungen.

Kurze Beschreibung der Zeichnungen.
- Fig. 1:: zeigt eine perspektivische Ansicht einer erfindungsgemäßen elektromechanischen Bremsvorrichtung zur Ausbildung der Formschlussverbindung
- Fig. 2:: zeigt einen Ausschnitt aus einem beispielhaften Querschnitt eines Kraftgehäuses;
- Fig. 3:: zeigt einen Ausschnitt aus einem beispielhaften Querschnitt eines beispielhaften Motorgehäuses;
- Fig. 4: zeigt einen vergrößerten Ausschnitt der Fig. 2;
- Fig. 5: zeigt einen vergrößerten Ausschnitt der Fig. 3.

### Ausführungsformen der Erfindung

In den Figuren sind gleiche Elemente oder Elemente mit gleicher Funktion mit denselben Bezugszeichen gekennzeichnet.

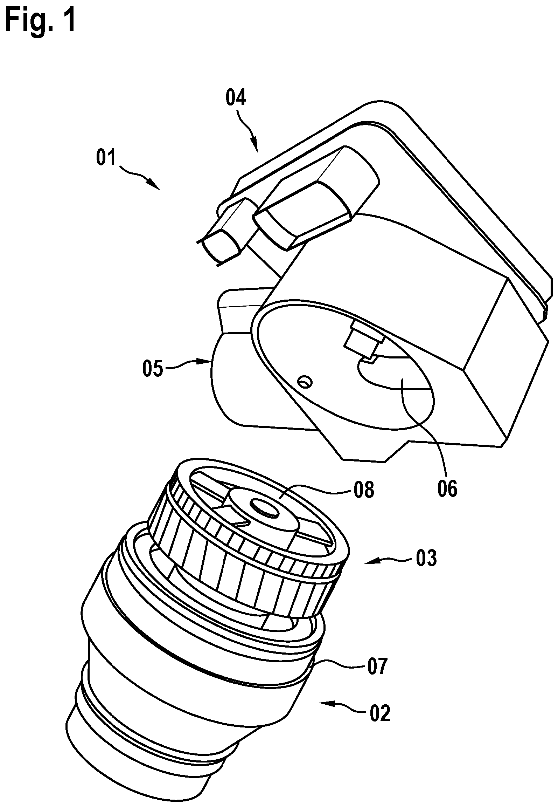

Fig. 1 zeigt eine elektromechanische Bremsvorrichtung 01. Die elektromechanische Bremsvorrichtung 01 weist ein Kraftgehäuse 02 auf, in dem ein vormontierter Gewindetrieb 03 aufgenommen oder angeordnet ist. Ferner umfasst die elektromechanische Bremsvorrichtung 01 ein Motorgehäuse 04, in dem ein nicht im Detail dargestellter Motor 05 sowie eine mit dem Gewindetrieb 03 im verbundenen Zustand von Motorgehäuse 04 und Kraftgehäuse 02 kämmende Übertragungseinheit 06, insbesondere Motorschnecke, angeordnet ist. Die Übertragungseinheit 06 wird vom Elektromotor angetrieben.

Vorteilhaft werden die Baugruppen des Kraftgehäuses 02 und des Motorgehäuses 04 in dem vormontierten Zustand, wie in Fig. 1 dargestellt, zur Durchführung des erfindungsgemäßen Verfahrens bereitgestellt. In einem auf die Darstellung der Fig. 1 folgenden Verfahrensschritt kann vorgesehen sein, dass das Kraftgehäuse 02 und das Motorgehäuse 04 in eine Verbindungsposition überführt werden. Dazu kann eine rohrförmige Überlappung zwischen Kraftgehäuse 02 und Motorgehäuse 04 hergestellt werden, in der beispielsweise eine Anschlagskontur 07 des Kraftgehäuses 02 einen Anschlag zu einer nicht im Detail dargestellten Anschlagskontur des Motorgehäuses 04 herstellt. In dieser Verbindungsposition erfolgt in einem nachfolgenden erfindungsgemäßen Verfahrensschritt das Ausbilden einer Formschlussverbindung zwischen Motorgehäuse 04 und Kraftgehäuse 02. Durch die Formschlussverbindung werden die Gehäuseteile miteinander verbunden und die Übertragungseinheit 06 mit dem endseitigen Eingriffsabschnitt 08 des Gewindetriebs 03 in Eingriff gebracht. Vorteilhaft kann vorgesehen sein, dass die Formschlussverbindung oder mehrere Formschlussverbindungen als sogenannte Crimp-Verbindung ausgeführt werden, wozu das Material des Motorgehäuses 04, welches vorteilhaft zum Teil aus Aluminiummaterial gefertigt ist, von außen in eine auf die Außenoberfläche des Kraftgehäuses ausgebildete Nut eingeformt wird.

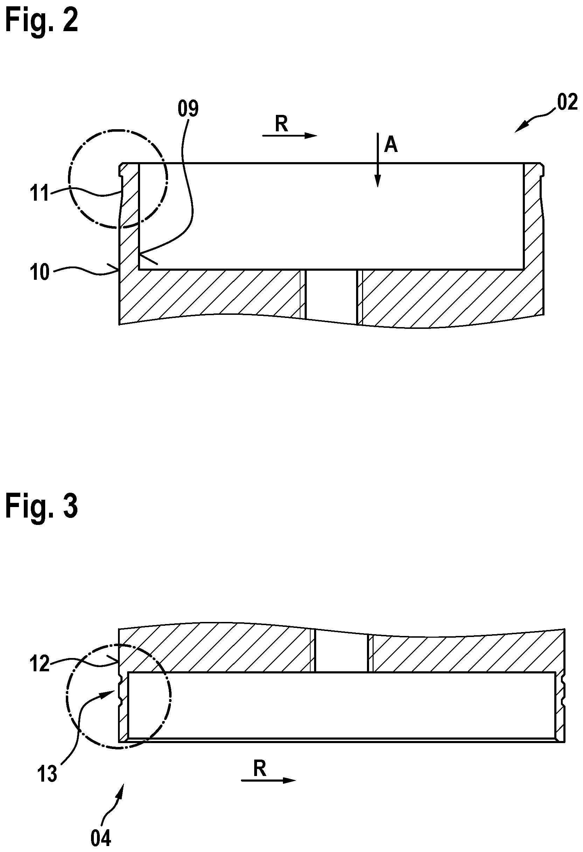

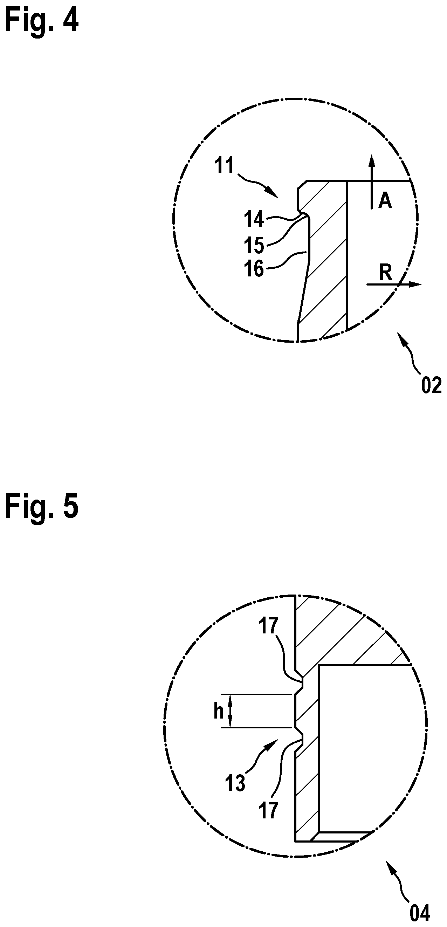

In der Fig. 2 ist beispielhaft ein Ausschnitt eines Schnitts durch einen Teil eines Kraftgehäuses 02 dargestellt. Auf einer Innenoberfläche 09 des Kraftgehäuses 02 können Bestandteile des Gewindetriebs 03, die in der Fig. 2 aus Übersichtlichkeitsgründen nicht dargestellt sind, zur Anlage kommen und/oder gelagert sein. Auf der Außenoberfläche 10 des Kraftgehäuses 02 ist eine in Umfangsrichtung umlaufende Nut 11 ausgebildet. Auf die Form der Nut 11 wird im Rahmen der Figurenbeschreibung der Fig. 4 noch im Detail eingegangen werden. Wenn das Material des Motorgehäuses 04, welches in der Fig. 2 ebenfalls nicht dargestellt ist, in einer Radialrichtung R im Bereich der Nut 11 eingeformt wird, führt das eingeformte Material zu einer Formschlussverbindung, die das Kraftgehäuse 02 in Axialrichtung A gegenüber dem Motorgehäuse 04 sichert.

Das Kraftgehäuse 02 ist aufgrund der vom Gewindetrieb 03 aufzunehmenden Kräfte während eines Bremsvorgangs besonders vorteilhaft aus einem Stahlmaterial geformt, bevorzugt als Stahl-Drehteil ausgebildet.

Die Fig. 3 zeigt einen Ausschnitt eines Schnitts durch ein Motorgehäuse 04. Auf einer Außenoberfläche 12 des Motorgehäuses 04, welches in dem dargestellten

Abschnitt oder Ausschnitt in vorteilhafter Weise aus Aluminium oder einer Aluminiumlegierung gebildet ist, ist eine Prägekontur 13 in Umfangsrichtung umlaufend ausgebildet welche durch ein nicht dargestelltes Einformwerkzeug, beispielsweise ein Stempel, abschnittsweise oder bereichsweise in Radialrichtung R nach innen verformt werden kann. Die Prägekontur 13 ist bevorzugt als Prägering ausgebildet. Details der Prägekontur 13 sind in der Fig. 5 dargestellt, die eine Vergrößerung B des Ausschnitts B der Fig. 5 zeigt.

Wie oben bereits angekündigt, zeigt die Fig. 4 einen vergrößerten Ausschnitt der Fig. 2, welcher in der Fig. 2 mit dem Buchstaben C gekennzeichnet ist. In der Fig. 4 ist der Querschnitt der Nut 11 vergrößert dargestellt. Diese verfügt im Bereich einer Nutwand 14 über eine abgeschrägte Kante sowie einen Radienübergang 15 hin zum Nutgrund 16. Über diesen Flaschen-Querschnitt der Nut 11 wird erreicht, dass ein Einformen von Material in Radialrichtung R dazu führt, dass das Kraftgehäuse 02 auch in Axialrichtung A eine Kraft erfährt. Bevorzugt liegen Kraftgehäuse 02 und Motorgehäuse 04 in der Verbindungsposition bereits im Anschlag zueinander vor. Trotzdem kann durch die Form der Nut 11 zusätzlich bewirkt werden, dass im Rahmen des Einformens des Materials des Motorgehäuses 04 eine zusätzliche Kraftbeaufschlagung und/oder Vorspannung des Kraftgehäuses 02 in Axialrichtung A auf das Motorgehäuse 04 zu bewirkt wird, was sicherstellt, dass die beiden Gehäuseteile in der gewünschten Relativposition der Verbindungsposition verharren und verbunden werden.

Die Fig. 5 zeigt vergrößert den in der Fig. 3 mit dem Buchstaben B gekennzeichneten Ausschnitt. Erkennbar ist, dass die Prägekontur 13 als Prägering ausgebildet ist, der beidseitig von in Umfangsrichtung verlaufenden Nuten 17 begrenzt wird. Dadurch wird sichergestellt, dass, insbesondere, wenn ein Einformwerkzeug oder Stempel benutzt wird, der höher ist, als die Höhe H der Prägekontur 13 auch bei einer geringfügigen Fehlpositionierung in Axialrichtung A des Motorgehäuses 04 gegenüber einem nicht dargestellten Einformwerkzeug - nämlich im Bereich der Höhe der beiden Nuten 17 - immer noch sichergestellt werden kann, dass an der richtigen Position eine ausreichende Einformung von Material des Motorgehäuse 04 erreicht wird.

Wie anhand der Fig. 3 und 5 erkennbar ist, kann durch den bevorzugt über den gesamten Umfang ausgebildeten Prägering der Prägekontur 13 an mehreren Stellen des Umfangs gleich verteilt oder ungleichmäßig verteilt, eine Ausbildung von mehreren Formschlussverbindungen oder mehreren Einzel-Formschlussverbindungen stattfinden. Dabei kann im Hinblick auf das erfindungsgemäße Verfahren sowohl vorgesehen sein, dass die Einzel-Formschlussverbindungen gleichzeitig oder nacheinander ausgebildet werden.

Weiterhin ist anhand der Fig. 3 und 5 gut erkennbar, dass die Prägekontur 13 besonders gut geeignet ist, um die Positionierung des Motorgehäuses 04, insbesondere zusammen mit dem Kraftgehäuse 02, gegenüber einem Einformwerkzeug in Axialrichtung A vorzugeben. Durch die optische Sichtbarkeit der Prägekontur 13 kann sowohl manuell als auch automatisch die Position des Motorgehäuses 04 erkannt und gegenüber einem Einformwerkzeug eingestellt oder justiert werden.

## Patentansprüche

1. Verfahren zur Herstellung einer elektromechanischen Bremsvorrichtung (1), insbesondere für den Einsatz in einem Kraftfahrzeug,
**gekennzeichnet durch**
das Verbinden eines Kraftgehäuses (02) und eines Motorgehäuses (04) mittels einer Formschlussverbindung, wobei in dem Kraftgehäuse (02) zur wenigstens teilweisen Aufnahme eines Gewindetriebs (03), bevorzugt eines Kugelgewindetriebs, eingerichtet ist und wobei das Motorgehäuse (04) zur Aufnahme eines elektrischen Antriebsmotors samt einer mit dem Gewindetrieb (03) in einem verbundenen Zustand kämmenden Übertragungseinheit (06), bevorzugt einer Motorschnecke, eingerichtet ist.

2. Verfahren nach Anspruch 1,
**dadurch gekennzeichnet,**
**dass** das Kraftgehäuse (02) und das Motorgehäuse (04) in eine Verbindungsposition gebracht werden in der ein Einformen von Material des Motorgehäuses (04) von außen in eine auf einer Außenoberfläche (10,12) des Kraftgehäuses (02) ausgebildete Nut (11) zur Ausbildung der Formschlussverbindung durchgeführt wird.

3. Verfahren nach Anspruch 2,
**dadurch gekennzeichnet,**
**dass** eine Einformposition von Motorgehäuse (04) und Kraftgehäuse (02) gegenüber einem Einformwerkzeug über eine Position einer Prägekontur (13), bevorzugt eines Prägering, eingestellt wird.

4. Verfahren nach Anspruch 3,
**dadurch gekennzeichnet,**
**dass** das Einformen mit einem Einformwerkzeug, bevorzugt einen Stempel, durchgeführt wird, der eine größere Höhenerstreckung als die Prägekontur (13), bevorzugt der Prägering, aufweist.

5. Verfahren nach einem der Ansprüche 2 bis 4,
**dadurch gekennzeichnet,**
**dass** durch das Einformen des Materials des Motorgehäuses (04) in die Nut (11,17) in Radialrichtung (R) das Motorgehäuse (04) und das Kraftgehäuse (02) in die Verbindungsposition kraftbeaufschlagt und/oder vorgespannt werden, wozu die Nut (11) einen Flaschenhals-Querschnitt aufweist.

6. Verfahren nach Anspruch einem der Ansprüche 1 bis 5,
**dadurch gekennzeichnet,**
**dass** vor dem Verbinden der Gewindetrieb (03) in dem Kraftgehäuse (02) vormontiert wird und/oder der Antriebsmotor und/oder die Übertragungseinheit (06) und/oder eine Steuereinheit in dem Motorgehäuse (04) vormontiert wird.

7. Elektromechanische Bremsvorrichtung (1), insbesondere für den Einsatz in einem Kraftfahrzeug, insbesondere hergestellt mit einem Verfahren nach einem der Ansprüche 1 bis 6,
**dadurch gekennzeichnet,**
**dass** über eine Formschlussverbindung ein Kraftgehäuse (02), in dem ein Gewindetrieb (3), bevorzugt ein Kugelgewindetrieb, wenigstens teilweise aufgenommen ist und ein Motorgehäuse (04), in dem ein elektrischer Antriebsmotor samt einer mit dem Gewindetrieb (03) in einem verbundenen Zustand kämmende Übertragungseinheit (06), bevorzugt Motorschnecke, aufgenommen ist, miteinander verbunden sind.

8. Elektromechanische Bremsvorrichtung nach Anspruch 7,
**dadurch gekennzeichnet,**
**dass** die Formschlussverbindung zwischen Kraftgehäuse (02) und Motorgehäuse (04) durch von außen eingeformtes Material des Motorgehäuses (04) in eine auf einer Außenoberfläche (10) des Kraftgehäuses (02) ausgebildete Nut (11) gebildet ist.

9. Elektromechanische Bremsvorrichtung (1) nach Anspruch 7 oder 8,
**dadurch gekennzeichnet,**
**dass** das Motorgehäuse (04) Aluminiummaterial aufweist oder draus besteht und/oder das Kraftgehäuse (02) Stahlmaterial aufweist oder daraus besteht.

10. Elektromechanische Bremsvorrichtung (1) nach einem der Ansprüche 7 bis 9,
**gekennzeichnet durch**
mehrere Formschlussverbindungen mittels von außen eingeformtem Material des Motorgehäuses (04) in eine auf einer Außenoberfläche (10) des Kraftgehäuses (02) ausgebildete Nut (11).

11. Elektromechanische Bremsvorrichtung (1) nach einem der Ansprüche 7 bis 10,
**gekennzeichnet durch**
eine Prägekontur (13), bevorzugt einen Prägering, der insbesondere beidseitig von einer Nut (17) begrenzt ist.
